(19)

**Europäisches Patentamt**
**European Patent Office**
**Office européen des brevets**

(11) **EP 3 976 865 B1**

(12) **EUROPEAN PATENT SPECIFICATION**

(45) Date of publication and mention
of the grant of the patent:
**30.07.2025 Bulletin 2025/31**

(21) Application number: **20737535.3**

(22) Date of filing: **27.05.2020**

(51) International Patent Classification (IPC):
***D01F 6/94*** *(2006.01)*   ***D01F 6/70*** *(2006.01)*

(52) Cooperative Patent Classification (CPC):
**D01F 6/94; D01F 6/70**

(86) International application number:
**PCT/IB2020/055015**

(87) International publication number:
**WO 2020/240429 (03.12.2020 Gazette 2020/49)**

(54) **POLYURETHANE ELASTIC YARN AND MANUFACTURING METHOD THEREOF**

ELASTISCHES POLYURETHANGARN UND HERSTELLUNGSVERFAHREN DAFÜR

FIL ÉLASTIQUE DE POLYURÉTHANE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2019   JP 2019098246**

(43) Date of publication of application:
**06.04.2022   Bulletin 2022/14**

(73) Proprietor: **Toray Opelontex Co., Ltd**
**Osaka 530-8222 (JP)**

(72) Inventors:
• **SUZUKI, Katsuya**
 **Otsushi, Shiga 520-8558 (JP)**
• **TANAKA, Toshihiro**
 **Otsushi, Shiga 520-8558 (JP)**
• **NAESHIRO, Kazuki**
 **Otsushi, Shiga 520-8558 (JP)**

(74) Representative: **Carpmaels & Ransford LLP**
**One Southampton Row**
**London WC1B 5HA (GB)**

(56) References cited:
**WO-A1-01/02630        WO-A1-2010/064612
WO-A1-2015/038977    CN-B- 103 898 631
GB-A- 2 530 436        JP-A- 2009 007 681
KR-B1- 100 898 578**

EP 3 976 865 B1

**Description**

Field of Technology

The present invention relates to a polyurethane elastic yarn with superior unwinding properties and hot melt adhesive properties, and to a manufacturing method thereof, and, further, relates to a polyurethane elastic yarn that is ideal for producing a stretchable sheet that demonstrates good hot melt adhesive properties, even when processing with a high draft, and to a manufacturing method thereof.

Prior Art

Elastic fibers, given their superior stretchability characteristics, are used broadly in stretchable garment applications, such as legwear, innerwear, sportswear, and the like, in sanitary applications (sanitary material applications), such as disposable diapers, sanitary napkins, and the like, and in industrial material applications.

In particular, in disposable sanitary applications, such as disposable diapers and sanitary napkins, there is the need for forming to enable stretchability in order to improve compliant fit to the user. In particular, with disposable paper diapers, there have been a variety of innovations that enable elastic stretchability around the waist, around the legs, around the torso, etc. The use of a woven fabric that has the ability to stretch elastically, as the raw material itself, has been considered, but would be costly when used in disposable worn articles. Because of this, normally a stretchable member that is in the form of a yarn or band is applied, in a stretched state, to a non-stretchable member, such as a nonwoven fabric, a plastic film, or the like, to enable the non-stretchable member to stretch elastically, to form a stretchable sheet or a member having "gathers." (See, for example, JP2010-168717.) The material that is bonded to the non-stretchable member to provide it with stretchability uses, specifically, a polyurethane elastic yarn in the form of a belt-shaped rubber band or yarn, and a hot melt adhesive agent is used for bonding.

On the other hand, patent document 2 teaches the use of various types of additives in a polyurethane elastic fiber for the purpose of improving hot melt adhesive properties.

Additionally, patent document 3 teaches the application of an oil in order to achieve both unwinding properties and a hot melt adhesive performance in a polyurethane elastic yarn.

Japanese Unexamined Patent Application Publication 2002-35029
Japanese Unexamined Patent Application Publication 2010-168717
WO 2016/143499
WO 2015/038977 discloses an elastic fiber containing e.g. a styrene-butadiene block copolymer as an additive.
GB 2 530 436 discloses an elastic fiber containing an ethylene vinyl acetate monomer or polymer.

Disclosure of the Invention

Problem Solved by the Present Invention

With the polyurethane elastic yarn that has been used conventionally for providing elastic stretchability, such as in patent document 1, drafting up and attaching the yarn, the resistance force in the polyurethane elastic yarn when stretching is high, producing detached yarns. When a large amount of hot melt adhesive agent is used in order to avoid this, in exchange for reducing the detached yarns, this may make the material hard, with stretchability that is unsatisfactory for a manufactured product.

When an attempt is made to improve the hot melt adhesive properties through additives, through applying the technology set forth in patent document 2, this tends to have an adverse effect on the unwinding properties of the polyurethane elastic yarn, which tends to produce broken yarns in the step for manufacturing the stretchable material.

In patent document 3 as well, there is the need for further improvement in the hot melt adhesive properties.

The object is to provide a polyurethane elastic yarn, and manufacturing method thereof, to solve the problem areas set forth above in the prior art, with superiority in the unwinding properties of the polyurethane elastic yarn and in the adhesive properties of the hot melt adhesive material, that enables a stretchable sheet that demonstrates good adhesive properties, even when processed with high draft, and that is well suited for producing sanitary products that have a soft feel.

In order to solve the problem set forth above, the present invention uses any of the means set forth below:

(1) A polyurethane elastic yarn including: a hydrocarbon resin (A) that has a structure wherein a polymer that includes, as the main structural units, structural units that use an aromatic olefin and/or an aliphatic diolefin as a monomer, is partially hydrogenated or completely hydrogenated, and a polyurethane, wherein the hydrocarbon resin (A) is dissolved at no less than 10 mass % at 20°C in respect to a hydrocarbon oil (b) and is insoluble in DMAc and/or DMF at 20°C, as defined in claim 1.

(2) A polyurethane elastic yarn as set forth in (1), above, wherein: the hydrocarbon resin (A) has a structure wherein the polymer that includes structural units that use an aromatic olefin as a monomer is partially hydrogenated or completely hydrogenated, and the aromatic olefin is indene and/or methyl styrene.

(3) A polyurethane elastic yarn as set forth in (1) or (2), above, wherein: the hydrocarbon resin (A) has a structure wherein the polymer that includes structural units that use an aliphatic diolefin as a monomer is partially hydrogenated or completely hydrogenated, and the aliphatic diolefin is isoprene and/or an isomer thereof.

(4) A polyurethane elastic yarn as set forth in any of (1) through (3), above, wherein: the thermal softening point of the hydrocarbon resin (A) is no less than 70°C and no greater than 140°C.

(5) A polyurethane elastic yarn as set forth in any of (1) through (4), above, wherein: the hydrocarbon resin (A) is included at no less than 0.1 mass % and no greater than 10 mass %.

(6) A method for manufacturing a polyurethane elastic yarn wherein: after a hydrocarbon resin (a) that has a structure wherein a polymer that includes, as the main structural units, structural units that use an aromatic olefin and/or an aliphatic diolefin as a monomer is partially hydrogenated or completely hydrogenated is dissolved in a hydrocarbon oil (b), the hydrocarbon resin (a) is added so as to be in a range of no less than 0.1 mass % and no greater than 10 mass % in respect to a polyurethane solid content in a polyurethane spinning solution, and solution spun, wherein hydrocarbon resin (A) is dissolved at no less than 10 mass % at 20°C in respect to a hydrocarbon oil (b) and is insoluble in DMAc and/or DMF at 20°C, as defined in claim 9.

Through the present invention, the polyurethane elastic yarn will be a polyurethane elastic yarn that has superior unwinding properties, good adhesive properties where hot melt is used, while still having superior elastic stretchability. In addition, this makes it possible to maintain superior hot melt adhesive properties, even when an oil is applied as a finishing material to the surface of the polyurethane elastic yarn. Because of this, through this polyurethane elastic yarn, a stretchable sheet can be produced that demonstrates good adhesive properties, and that can stretch with low stress, even when processed with high draft. Moreover, when manufacturing a sanitary product, such as a disposable diaper, a sanitary napkin, or the like, this enables manufacturing without broken yarns, even with increased manufacturing speed, and possible also to reduce costs through reducing the amount of hot melt adhesive agent. The hot melt adhesion retention rate can be used as a metric for the adhesive properties. Furthermore, in sanitary products that use a reduced amount of hot melt adhesive agent, there will be less hardening of the material caused by the hot melt adhesive agent, resulting in a softer feeling, thus producing a product that is superior in comfort and fit.

The present invention will be described in greater detail below.

The polyurethane that is used in the present invention will be described first.

Insofar as the polyurethane that is used in the present invention includes a structure that is obtained using a polymer diol and diisocyanate as the starting materials, there is no particular limitation thereon. Note that here the specification of the starting raw material for the polyurethane structure is due to the fact that in some cases various different types of polymer diols and diisocyanate are used, and in such cases it is difficult to describe the structure precisely with chemical names. That is, the starting materials are used in order to specify the structural units that are derived thereby. Consequently, even a polyurethane that is obtained using a different raw material would not be excluded insofar as it has a structure that could be obtained using a polymer diol and diisocyanate as the starting materials, nor is there any particular limitation on the synthesizing method. The polyurethane may be, for example, polyurethane urea, which uses, as the starting material, a polymer diol, diisocyanate, and a low molecular weight diamine, or may be a polyurethane that uses, as a starting material, a polymer diol, diisocyanate, and a low molecular weight diol. In addition to these, it may be a polyurethane urea that uses, as a starting material, a compound that has, within the molecules, amino groups and hydroxyl groups, as chain extending agents. Isocyanates and glycols that are polyfunctional, of trifunctional and above, may be included in the starting material in a range that does not interfere with the effects of the present invention.

Here the explanation will be based on the starting materials, for a typical unit for structuring the polyurethane elastic yarn according to the present invention.

The polymer diol used in the present invention preferably is a polyether or polyester diol, a polycarbonate diol, or the like. Moreover, from the perspective of applying flexibility and elongation to the yarn, use of a polyether diol, in particular, is preferred.

The polyether diol may be, for example, polyethylene oxide, polyethylene glycol, a derivative of polyethylene glycol, polypropylene glycol, polytetramethylene ether glycol (hereinafter abbreviated PTMG), modified PTMG (hereinafter abbreviated "3M-PTMG") that is a copolymer of tetrahydrofuran (THF) and methyltetrahydrofuran, modified PTMG that is a copolymer of THF and 2,3-dimethyl THF, a polyol that has sidechains on both sides, disclosed in, for example, Japanese Patent 2615131, a random copolymer with THF wherein ethylene oxides and/or propylene oxides are arranged randomly, or the like. These polyether diols may be of a single type or a mixture of two or more types, or may be used in a copolymerization.

Moreover, from the perspective of wear resistance and light stability of the polyurethane elastic yarn, preferably a polyester diol, such as butylene adipate, polycaprolactone diol, a polyester polyol having sidechains such as disclosed in, for example, Japanese Unexamined Patent Application Publication S61-26612, or the like, or a polycarbonate diol, such as disclosed in, for example, Japanese Examined Patent Application Publication H2-289516, is used.

Moreover, these polymer diols may be used alone, in a mixture of two or more thereof, or used in copolymerization.

Preferably the molecular weight of the polymer diol used in the present invention, from the perspective of providing elongation, tensile strength, thermal durability, and the like, when formed into a yarn, is a number-average molecular weight of no less than 1000 and no greater than 8000, and, more preferably, no less than 1800 and no greater than 6000. The use of a polyol of a molecular weight in this range makes it easy to produce an elastic yarn that is superior in elongation, tensile strength, elastic recovery force, and thermal durability.

For the diisocyanate used in the present invention, aromatic diisocyanates such as diphenylmethane diisocyanate (hereinafter abbreviated as MDI), tolylene diisocyanate, 1,4-diisocyanatobenzene, xylylene diisocyanate, 2,6-naphthalene diisocyanate, and the like, are well suited to synthesizing a polyurethane with high thermal durability and high-strength. Moreover, for an alicyclic diisocyanate, methylene bis (cyclohexyl isocyanate), isophorone diisocyanate, methyl cyclohexane 2,4-diisocyanate, methyl cyclohexane 2,6-diisocyanate, cyclohexane 1,4-diisocyanate, hexahydroxylylene diisocyanate, hexahydrotolylene diisocyanate, octahydro 1,5-naphthalene diisocyanate, and the like, for example, are preferred. Aliphatic diisocyanates can be used effectively, in particular, in suppressing yellowing of the polyurethane elastic yarn. Note that these diisocyanates may be used alone, or two or more types thereof may be used together.

Next, for a chain extending agent in the present invention, preferably a low molecular weight diamine and/or a low molecular weight diol is used. Note that a hydroxyl group and an amino group may be included within the molecule, such as in ethanol amine.

Preferred low molecular weight diamines include, for example, ethylenediamine, 1,2-propanediamine, 1,3-propanediamine, hexamethylenediamine, p-phenylenediamine, p-xylylenediamine, m-xylylenediamine, p,p'-methylenedianiline, 1,3- cyclohexyldiamine, hexahydromethaphenylenediamine, 2-methylpentamethylenediamine, bis (4-aminophenyl) phosphine oxide, and the like. Preferably one or more of these is used. Ethylene diamine is particularly preferred. The use of ethylene diamine makes it possible to produce a yarn that is superior in elongation and elastic recovery properties, and thermal durability as well. Triamine compounds, for example, diethylene triamine, and the like, able to form cross-linking structures, may be added to the chain extending agent in an amount that does not interfere with the effects.

Moreover, ethylene glycol, 1,3 propanediol, 1,4 butanediol, bishydroxyethoxybenzene, bishydroxyethylene terephthalate, 1-methyl-1,2-ethanediol, and the like, are typical low molecular weight diols. Preferably one or more of these is used. Ethylene glycol, 1,3 propanediol, and 1,4 butane diol are particularly preferred. The use of these enables the production of a yarn with higher thermal durability and higher strength, as an elongated polyurethane.

Moreover, preferably the molecular weight of the polyurethane elastic yarn according to the present invention, from the perspective of producing a fiber with high durability and strength, is in a range of no less than 30,000 and no greater than 150,000, as a number-average molecular weight. Note that the molecular weight is measured through GPC, and is a calculated equivalent using polystyrene.

In the present invention, having the basic structure of the polyurethane elastic yarn, as described above, include a hydrocarbon resin (A) that has a structure wherein a polymer that includes, as the main structural unit, a structural unit wherein an aromatic olefin and/or aliphatic diolefin is a monomer is partially hydrogenated or completely hydrogenated can greatly improve the adhesive properties, when used as a hot melt, while improving the unwinding properties of the polyurethane elastic yarn.

There is no particular limitation on the hydrocarbon resin (A) in the present invention, insofar as it has a structure wherein a polymer that includes, as the main structural unit, a structural unit wherein an aromatic olefin and/or aliphatic diolefin is the monomer has been partially hydrogenated (sometimes termed "partial hydrogenation," below) and/or completely hydrogenated (sometimes termed "complete hydrogenation," below). Note that partial hydrogenation in the present invention refers to between 50% and 100% of the double bonds that are included in the normal polymer being hydrogenated. Moreover, when simply written as "hydrogenation," this indicates both the ranges of partial hydrogenation and complete hydrogenation. In this description, the "polymer that includes, as the main structural unit, a structural unit wherein an aromatic olefin and/or aliphatic diolefin is a monomer" will be written as a "hydrocarbon resin precursor polymer." Generally both the "hydrocarbon resin precursor polymer" and the "hydrocarbon resin (A)" are simply termed "petroleum resins," and often no distinction is made therebetween, but in the present invention, these are distinguished by the structures thereof, as described above. Note that, of "hydrocarbon resins (A)," that which is completely hydrogenized may also be termed a "saturated hydrocarbon resin." The hydrocarbon resin (A) may have structural units of the plurality of types, and a structure that is partially hydrogenated, where in such a case it would be difficult to express the structure precisely through a chemical name, and thus for convenience in the explanation below specification will be through the monomer that applies the structure prior to hydrogenation. That is, the explanation of the monomer is used as means for specifying a structure that is derived therefrom, and is not meant to limit the raw material.

The petroleum resin that is the hydrocarbon resin precursor polymer and the hydrocarbon resin (A) may be a "C9 petroleum resin" that uses primarily an aromatic olefin as the monomer, a "C5 petroleum resin" that uses primarily an aliphatic diolefin as the monomer, or a "C5/C9 petroleum resin" that is a mixture thereof. Here the "uses primarily an aromatic olefin as the monomer" refers to the structural units deriving from aromatic olefins being included at more than 50 mol% in relation to the entirety, including structural units derived from other monomers. Moreover, the "uses primarily an aliphatic diolefin as the monomer" similarly refers to the structural units deriving from aliphatic diolefins being included at more than 50 mol% in relation to the entirety, including structural units derived from other monomers.

The monomer that provides the structural units of the C9 petroleum resin (sometimes termed the "C9 petroleum resin monomer," below) may have alkyl benzene and an aromatic olefin as the main components, where the alkyl benzene may be isopropylbenzene, n-propylbenzene, 1-methyl-2-ethylbenzene, 1-methyl-3-ethylbenzene, 1-methyl-4-ethylbenzene, 1,3,5-trimethylbenzene, 1,2,3-trimethylbenzene, 1,2,4-trimethylbenzene, 1-methyl-2-n-propylbenzene, 1-methyl-3-n-propylbenzene, 1-methyl-4-isopropylbenzene, 1,3-diethylbenzene, 1,4-diethylbenzene, or the like.

Moreover, the aromatic olefin may be $\alpha$-methylstyrene, $\beta$-methylstyrene, o-methylstyrene, m-methylstyrene, p-methylstyrene, indene, m-methylpropenylbenzene, m-methylisopropenylbenzene, p-methylisopropenylbenzene, o-ethylstyrene, m-ethylstyrene, p-ethylstyrene, m,m-dimethylstyrene, dimethylstyrene, methylindene, or the like. In the present invention, when the C9 petroleum resin is included in the hydrocarbon resin precursor polymer or the hydrocarbon resin (A), preferably indene and methyl styrene are included as monomers.

The monomer that provides the structural unit for the C5 petroleum resin (sometimes termed the "C5 petroleum resin monomer," below) may be 1-pentene, 2-pentene, 2-methyl-1 butene, 2-methyl-2-butene, cyclopentene, 1,3-pentadiene, isoprene, cyclopentadiene, dicyclopentadien, or the like. When, in the present invention, the C5 petroleum resin is included in the hydrocarbon resin precursor polymer or hydrocarbon resin (A), preferably isoprene is included as the monomer.

The inclusion of such a hydrocarbon resin (A) can improve the hot melt adhesive properties of the polyurethane elastic yarn in particular. The hydrogenated petroleum resin (the C5 petroleum resin and/or C9 petroleum resin) has superior compatibility with the component (a) of the present invention, and can be included with stability in the polyurethane elastic yarn.

Preferably the softening point of the hydrocarbon resin (A) in the present invention is in a range between 70 and 140°C, in order to have good adhesion with the hot melt adhesive agent, and in order to have good compatibility with the hydrocarbon oil (b) when manufacturing, as described below. The use of a hydrocarbon resin (A) wherein the softening point is at least 70°C not only further improves the ability to maintain adhesive strength with the hot melt adhesive agent under a high temperature environment after hardening of the hot melt adhesive agent, but also produces good creep resistance as well. On the other hand, the use of a hydrocarbon (A) wherein the softening point is no greater than 140°C causes the compatibility with the hydrocarbon oil (b) to be superior when manufacturing as described below, making it possible to dissolve the hydrocarbon resin (A) into the hydrocarbon oil (b) at high concentrations, greatly reducing the amount by which the stretchability of the polyurethane elastic yarn is reduced.

Note that the "softening point of the hydrocarbon resin (A)" is the value that is measured following JIS K 2207:2006.

Of products that are commercially available as petroleum resins for the hydrocarbon resin (A), those products that are commercially available as hydrogenated or saturated hydrocarbon resins may be used. For example, it may be one of the following products, or the like:

Partially hydrogenated petroleum hydrocarbon resins of petroleum resins wherein an aliphatic component and an aromatic component are copolymerized:

Manufactured by Idemitsu Kosan: "I-Marv (registered trademark)" S-100 (softening point = 100°C)
"I-Marv (registered trademark)" S-110 (softening point = 110°C).

Completely hydrogenated petroleum hydrocarbon resins of petroleum resins wherein an aliphatic component and an aromatic component are copolymerized:

Manufactured by Idemitsu Kosan:

"I-Marv (registered trademark)" P-100 (softening point = 100°C)
"I-Marv (registered trademark)" P-125 (softening point = 125°C).

Manufactured by Tonen General Sekiyu:

"T-REZ (registered trademark)" HB103 (softening point = 100°C)
"T-REZ (registered trademark)" HB125 (softening point = 125°C)

Completely hydrogenated petroleum hydrocarbon resins of aliphatic petroleum hydrocarbon resins:

Manufactured by Eastman Chemical Company:

"Eastotac (registered trademark)" H-130W (softening point = 130°C)
Partially hydrogenated petroleum hydrocarbon resins of aromatic petroleum hydrocarbon resins:
Manufactured by Arakawa Chemical Company:

"ARKON (registered trademark)" M-100 (softening point = 100°C)
"ARKON (registered trademark)" M-135 (softening point = 135°C)

Completely hydrogenated petroleum hydrocarbon resins of aromatic petroleum hydrocarbon resins:
Manufactured by Arakawa Chemical Company:

"ARKON (registered trademark)" P-90 (softening point = 90°C)
"ARKON (registered trademark)" P-125 (softening point = 125°C)

These hydrocarbon resins (A) may be present uniformly within the polyurethane elastic yarn, or may be present at a higher concentration in a specific region; however, from the perspective of improving the hot melt adhesive properties, preferably they exist in higher concentrations near the surface layer of the polyurethane elastic yarn.

Moreover, the total inclusion proportion within the polyurethane elastic yarn preferably is in a range of no less than 0.1 mass % and no greater than 10 mass %, and from the perspective of causing the stress relaxation, permanent strain rate, and elongation to be particularly good, a range of no less than 1 mass % to no greater than 5 mass % is more preferred. If the total inclusion proportion were less than 0.1 mass %, this could cause a reduction in the hot melt adhesive performance, which would be undesirable. Conversely, if the total inclusion proportion were to exceed 10 mass %, this could have a negative effect on the stress relaxation, the permanent strain rate, and the elongation, so would be undesirable. Note that, more preferably, inclusion proportions are tested in advance, and are adjusted as appropriate.

Moreover, in the present invention, the hydrocarbon resin (A) dissolves at no less than 10 mass % at 20°C in respect to hydrocarbon oil (b), and is insoluble in DMAc and/or DMF. The hydrocarbon resin (A) having this solubility makes it possible to produce a polyurethane elastic yarn having superior hot melt adhesive properties and unwinding properties.

The hydrocarbon resin (A) has a solubility of no less than 10 mass % at 20°C in respect to the hydrocarbon oil (b), as this causes the affinity with the hot melt adhesive agent to be better.

On the other hand, while it is possible to produce superior hot melt adhesive performance through having the hydrocarbon resin (A) have high solubility at 20°C in respect to the hydrocarbon oil (b), if there were solubility in excess of 80 mass %, then there could be an increase in the amount of yarn breakage, due to evaporation from the polyurethane elastic yarn during spinning, which would be undesirable.

Moreover, having the hydrocarbon resin (A) be insoluble in DMAc and/or DMF, which are solvents for polyurethane elastic solutions, makes it possible to cause higher concentrations near the surface layer of the polyurethane elastic yarn. In this case, "insoluble" refers to a range wherein the solubility is no greater than 5 mass %, when stirred for one hour at 20°C.

Having the hydrocarbon resin (A) be biased toward the vicinity of the surface layer in the polyurethane elastic yarn enables demonstration of more superior hot melt adhesive properties, which would work to cause an effect of reducing the coefficient of friction between polyurethane elastic yarns, and can also improve the unwinding properties of the polyurethane elastic yarn.

There is no particular limitation on the hydrocarbon oil (b) in the present invention insofar as the proportion of the hydrocarbon components having a carbon number between 6 and 60 is no less than 90%, and the hydrocarbon oil (b) is fluid at 30°C, where the chemical structure thereof may be either linear or branched. Moreover, it may have a hydroxyl groups in a portion, in a range that does reduce the hydrophobicity. Among these, from the perspective of ease of acquisition and of cost, mineral oils and higher alcohols are preferred for the hydrocarbon oil (b).

Although there is no particular limitation on the mineral oil, it may be a machine oil, a spindle oil, a liquid paraffin, or the like, in either one type, or two or more types, may be used. The viscosity, using a Redwood viscometer, of the mineral oil at 30°C is preferably between 30 seconds and 350 seconds, more preferably between 35 seconds and 200 seconds, and even more preferably between 40 seconds and 150 seconds. Because it produces little odor, liquid paraffin is preferred as the mineral oil.

The higher alcohol is a linear and/or branched monoalcohol selected from hexanol, heptanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, triacosanol, 2-ethylhexanol, 2-propyl heptanol, 2-butyl octanol, 1-methylheptadecanol, 2-hexyloctanol, 1-hexylheptanol, isodecanol, isotridecanol, 3,5,5-trimethyl hexanol, hexenol, heptenol, octenol, nonenol, decenol, dodecenol, dodecenol, tridecenol, tetradecenol, pentadecenol, hexadecenol, heptadecenol, octadecenol,

nonadecenol, icosenol, dococonol, tetracosecol, pentacosenol, hexacosenol, heptacosenol, octacosenol, nonacoseneol and triaconsenol, isohexenol, 2-ethylhexenol, isotridecenol, 1-methyl heptadecenol, 1-hexyl heptenol, isotridecenol or isooctadecenol.

Moreover, the polyurethane elastic yarn according to the present invention preferably includes a hydrocarbon oil (b) in a range wherein the total inclusion proportion in the polyurethane elastic yarn is no less than 0.01 mass % and no greater than 20 mass %, and from the perspective of improving, in particular, the stress relaxation, permanent strain rate, and elongation, a range of no less than 0.01 mass % and no greater than 10 mass % is even more preferred.

Moreover, preferably one type of terminal blocking agent, or a mixture of two or more types of terminal blocking agents, is used in the polyurethane elastic yarn according to the present invention. Preferably the terminal blocking agent is: a monoamine such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine, diamylamine, or the like; a monool such as ethanol, propanol, butanol, isopropanol, allyl alcohol, cyclopentanol, or the like; a monoisocyanate such as phenyl isocyanate, or the like; and so forth.

Moreover, the polyurethane elastic yarn according to the present invention may include various types of stabilizing agents, pigments, and the like. For example, preferably BHT or a hindered phenol-based chemical, such as "Sumilizer GA-80," manufactured by Sumitomo Chemical Industries Corporation, various types of benzotriazole-based or benzophenone-based chemicals such as "Tinuvin," manufactured by Ciba Geigy Corporation, phosphor-based chemicals such as "Sumilizer P-16," manufactured by Sumitomo Chemical Industries Corporation, various types of hindered amine-based chemicals, various types of pigments such as iron oxide, titanium oxide, and the like, inorganic substances such as zinc oxide, cerium oxide, magnesium oxide, calcium carbonate, carbon black, and the like, fluorine-based or silicone-based resin powders, metal soaps such as magnesium stearate, and the like, and also germicides that include silver, zinc, or compounds thereof, or the like, deodorizing agents, various types of antistatic agents such as betaine, those based on phosphoric acid, and the like, are included in a light stabilizing agent and oxide inhibitor, and preferably these are caused to undergo a polymer reaction. Additionally, in particular, in order to further improve the resistance to light and to various types of nitrogen oxides, preferably a nitrogen oxide scavenger, such as HN-150, manufactured by Japan Hydrazine Corporation, a thermal oxidation stabilizing agent, such as "Sumilizer GA-80," manufactured by Sumitomo Chemical Industries Corporation, for example, and an optical stabilizing agent, such as "Sumisorb 300#622," manufactured by Sumitomo Chemical Industries Corporation, for example, are also used.

A method for manufacturing a polyurethane elastic yarn according to the present invention will be explained in detail next.

In the present invention, a hydrocarbon resin (a) that has a structure wherein a polymer that includes, as the main structural units, structural units that use an aromatic olefin and/or an aliphatic diolefin as the monomer has been partially hydrogenated or completely hydrogenated is dissolved in a hydrocarbon oil (b) and added to a spinning solution that includes a polyurethane (sometimes termed a "polyurethane spinning solution," below) in a range wherein the hydrocarbon resin (a) is no less than 0.1 mass % and no greater than 10 mass % in respect to the polyurethane solid content in the polyurethane spinning solution. The hydrocarbon oil (b) and hydrocarbon resin (a) may be added together in the polyurethane polymerizing stage, but preferably the polyurethane solution is manufactured in advance, and the addition is thereafter. Here the definition of the hydrocarbon resin (a) is the same as that for the hydrocarbon resin (A), described above. This distinction in notation is made because the hydrocarbon resin (a), as a manufacturing raw material, may include a plurality of components, where, for example, in a spinning solution for wet spinning, there may be cases wherein the composition is not strictly identical to the hydrocarbon resin (A) in the polyurethane elastic yarn that is produced, due to the distribution of components between solid/liquid and the spinning solvent.

The method for manufacturing the polyurethane spinning solution, or the method for manufacturing the polyurethane that is the solute in the solution, may be either a melt polymerization method or a solution polymerization method. However, that which is more preferred is the solution polymerization method. With the solution polymerization method, there is little production of contamination, such as gel, in the polyurethane, and spinning is easy, making it easy to produce a low gauge polyurethane elastic yarn. Moreover, by nature, solution polymerization has the benefit of making possible to omit the operation for converting to a solution.

Additionally, as a particularly ideal polyurethane in the present invention, synthesis is performed using PTMG with a molecular weight of no less than 1500 and no greater than 6000 as the polymer diol, MDI as the diisocyanate, and 1,3 propanediol and/or 1,4 butanediol, as the diol, with a melting point at the high-temperature side of no less than 200°C and no greater than 260°C.

The polyurethane may be obtained through synthesis using the raw materials described above, in DMAc, DMF, DMSO, NMP, or the like, or solvents having these as main ingredients. For example, they can be obtained through the use of particularly suitable methods such as a "one-shot method," wherein the various raw materials are introduced into a solvent and dissolved, heated to an appropriate temperature and reacted to produce the polyurethane, a method wherein the polymer diol and the diisocyanate are first melted and caused to react, followed by dissolving the reactant in a solvent and reacting with the diol, described above, to produce a polyurethane, or the like. When a diol with a chain elongating agent is used, the typical method for adjusting the melting point, at the high-temperature side, of the polyurethane to the range of no less than 200°C and no greater than 260°C is achieved through controlling the types and proportions of the polymer diol, the MDI, and the diol. When the molecular weight of the polymer diol is low, having the proportion of MDI be relatively large makes it possible to produce a polyurethane with a high melting point at the high-temperature side, and, similarly, when the molecular weight of the diol is low, having the proportion of the polymer diol be relatively small makes it possible to produce a polyurethane with a high melting point at the high-temperature side.

If the molecular weight of the polymer diol is 1800 or more, then preferably, to cause the melting point on the high-temperature side to be no less than 200°C, polymerization is carried out with a proportion of (moles of MDI)/(moles of polymer diol) = 1.5 or more.

Note that when synthesizing this polyurethane, preferably at least one catalyst, or a mixture of two or more catalysts, such as an amine catalyst or an organic metal catalyst, or the like, is used. The amine catalyst may be, for example, N,N-dimethylcyclohexylamine, N,N-dimethylbenzylamine, triethylamine, N-methylmorpholine, N-ethylmorpholine, N,N,N', N'-tetramethylethylenediamine, N,N,N',N'-Tetramethyl-1,3-propanediamine, N,N,N',N'-tetramethylhexanediamine, bis-2-dimethylaminoethyl ether, N,N,N', N', N'-penta methyldiethylenetriamine, tetramethylguanidine, triethylenediamine, N,N'-dimethylpiperazine, N-methyl-N'-dimethylaminoethyl-piperazine, N- (2-dimethylaminoethyl) morpholine, 1-methylimidazole, 1,2-dimethylimidazole, N,N-dimethylaminoethanol, N,N,N'-trimethylaminoethylethanolamine, N-methyl-N'-(2-hydroxyethyl) piperazine, 2,4,6-tris (dimethylamino) methyl) phenol, N,N-dimethylamino hexanol, triethanolamine, or the like.

The organic metal catalyst may be to an approximate, tin octanoate, dibutyltin dilaurate, lead dibutyl octanoate, or the like. Preferably the density of the polyurethane spinning solution thus produced is normally in a range of no less than 30% by weight and no more than 80% by weight.

In the present invention, preferably the hydrocarbon resin (a) wherein a polymer that includes, as the main structural units, structural units that use the aromatic olefin and/or aliphatic diolefin, described above, as the monomer, is partially hydrogenated or completely hydrogenated is added to the polyurethane solution prior to spinning. When adding, to the polyurethane solution, the hydrocarbon resin (a) wherein the structure that includes, as the main structural units, structural units that use aromatic olefin and/or aliphatic diolefin as the monomer is partially hydrogenated or completely hydrogenated, and stirring or mixing processing is performed so as to disperse or dissolve uniformly, an arbitrary method may be employed. As typical methods, various types of methods, such as a method that uses a static mixer, a stirring method, a method that uses a homomixer, a method that uses a twin-screw extruder, may be employed. Here, from the perspective of uniformly adding, to the polyurethane solution, the hydrocarbon resin (a) that has a structure wherein a polymer that includes as the main structural units structural units that use a aromatic olefin and/or an aliphatic diolefin as the monomer is partially hydrogenated or completely hydrogenated, it is dissolved in the hydrocarbon oil (b) in advance and then added.

Moreover, when adding the hydrocarbon resin (a) that has a structure wherein a polymer that includes, as the main structural units, structural units that use an aromatic olefin and/or an aliphatic diolefin as the monomer is partially hydrogenated or completely hydrogenated, the chemical agents and pigments and the like, such as the light stabilizing agents, oxidation inhibitors, and like, described above, may be added simultaneously. The polyurethane elastic yarn according the present invention may be produced through, for example, dry spinning, wet spinning, or melt spinning the spinning solution that is structured as described above, and winding. Of these, dry spinning is preferred from the perspective of being able to spin with stability all gauges, ranging from fine through thick.

There is no particular limitation on, for example, the gauge or cross-sectional shape of the polyurethane elastic yarn in the present invention. For example, the cross-sectional shape of the yarn may be circular, or it may be flat.

Additionally, there is no particular limitation regarding the dry spinning method, where the spinning should be performed after selecting spinning conditions, and the like, as appropriate in accordance with the desired characteristics and the spinning equipment.

For example, because the permanent strain rate and stress relaxation of the polyurethane elastic yarn according the present invention is particularly prone to being affected by the speed ratio between the godet roller and the winding equipment, this should be determined as appropriate depending on the purpose for use of the yarn.

That is, from the perspective of obtaining a polyurethane elastic yarn having a desirable permanent strain rate and stress relaxation, the winding is carried out with the speed ratio between the godet roller and the winding equipment in a range of no less than 1.10 and no greater than 1.65. Given this, when producing a polyurethane elastic yarn having a relatively low permanent strain rate and low stress relaxation, more preferably the speed ratio between the godet roller and the winding equipment is in a range of no less than 1.15 and no greater than 1.4, where a range of no less than 1.15 and no greater than 1.35 is even more preferred. On the other hand, when producing a polyurethane elastic yarn having a relatively high permanent strain rate and high stress relaxation, preferably winding is carried out with the speed ratio of the godet roller and the winding equipment in a range of no less than 1.25 and no greater than 1.65, and more preferably in a range of no less than 1.35 and no greater than 1.65.

Moreover, from the perspective of improving the strength of the polyurethane elastic yarn produced, preferably the spinning speed is no less than 300 m/min.

In addition, preferably a treating agent is applied, for the purpose of improving the unwinding properties, when winding up the polyurethane elastic yarn. In applying the treating agent to the polyurethane elastic yarn, there is the so-called "neat oiling," wherein the oil is supplied as-is, without diluting the treating agent with a solvent, or the like. The step for application may be in any step, such as in a step subsequent to spinning and prior to winding into a package, in the step for warping onto the warping machine, or the like, where the method of application may use a known method, such as roller oiling, guide oiling, spray oiling, or the like. The amount of the treating agent applied is between 0.1 and 7 mass %, in respect to the polyurethane elastic yarn, but, from the perspective of not interfering with hot melt adhesive properties, preferably it is between 0.1 and 3 mass %.

The composition of the treating agent may be a silicon-based oil, a mineral oil-based oil, or a silicon-mineral oil mixed oil, as is generally used on polyurethane elastic yarns, but from the perspective of achieving both unwinding performance and hot melt adhesive performance, preferably it is a mineral oil-based oil or a mixed oil of a silicon-mineral oil.

Preferably a silicone oil, or the like, is used wherein the silicon is: 1) a polydimethyl siloxane that is made from dimethyl siloxane units; 2) a polydialkyl siloxane that is made from the dimethyl siloxane units and dialkyl siloxane units that include alkyl groups with carbon numbers between 2 and 4; 3) a polysiloxane that is made from dimethyl siloxane units and methylphenyl siloxane units; or the like.

From the perspective of ease of handling, and of reducing the traveling friction against guide members, and the like, a viscosity of between 0.1 and 1000 mm$^2$/sec, at 25°C, is preferred. This viscosity can be measured using the method described in JIS-K 2283 (Crude Oil and Petroleum Product-Kinematic Viscosity Test Methods and Viscosity Index Calculating Methods).

When a silicone oil is used, preferably it is mixed with a paraffin-based hydrocarbon, such as a mineral oil, an antistatic agent, a dispersing agent, a metal soap, and the like, for use.

From the perspective of ease of handling, and of reducing traveling friction against the guide members, and the like, preferably the paraffin-based hydrocarbon, such as a mineral oil, or the like, has a viscosity of between 10 and 500 mm$^2$/sec, at 25°C.

Preferably, an anionic surface activating agent such as an alkyl sulfate, a fatty acid soap, an alkyl sulfonate, an alkyl ester phosphate, or the like, is used as the antistatic agent.

Preferably a silicone resin, a polyether-modified silicone, a carbonol-modified silicone, a carboxyl-modified silicone, an amino-modified silicone, an amide-modified silicone, a carboxyamide-modified silicone, a mercapto-modified silicone, an organic carboxylic acid, or the like, is used, either singly or in a mixture thereof, as the dispersing agent.

Magnesium stearate and calcium stearate are preferred for the metal soap, where, from the perspective of ease of handling and improved dispersion performance, preferably the average particle diameter is between 0.1 and 1.0 μm.

Moreover, as necessary, preferably components that are used in normal synthetic fiber treating agents, such as coupling agents, ultraviolet radiation absorbing agents, oxidation inhibiting agents, corrosion inhibiting agents, wettability improving agents, and the like, are included in the silicone oil that is used in the present invention. The inclusion proportions of the paraffin-based hydrocarbon, such as the mineral oil, or the like, metal soap, antistatic agent, dispersing agent, and so forth may be determined as appropriate depending on the purpose.

Examples

While the present invention will be explained in more detail using examples, the present invention is not limited to these forms. The methods for evaluating the various types of characteristics in the present invention will be explained below first.

Tensile Strength and Elongation of the Polyurethane Elastic Yarn

An Instron model 4502 pull tester was used to measure the strength and elongation, at the moment of breaking, of samples of the polyurethane elastic yarn.

Specifically, elongation to 300%, with a pulling speed of 50 cm/min, of a sample yarn with a sample length of 5 cm (L1) was repeated five times. This length was then maintained for 30 seconds. On the sixth time, the sample yarn was stretched until breaking. The tension at the moment of breaking was defined as (G3), and the sample length at the moment of breaking was defined as (L3). The characteristics described above are given through the following formulas:

$$\text{Breaking strength} = (G3)$$

$$\text{Breaking elongation} = 100 \times \{ (L3) - (L1) \}/(L1)$$

Note that the pulling test was performed five times, and the mean was calculated.

Unwinding Performance of the Polyurethane Elastic Yarn

After a 4.5 kg wound yarn body of the polyurethane elastic yarn was stored for 14 days in a 35°C, 65% RH ambient, the wound yarn body was unwound to the position that is 1 cm from the winding cone, and the wound yarn body, after unwinding, was placed so that the surface thereof was in contact with a textured roller (a), and the polyurethane elastic yarn was fed out, at the roller surface speed of 30 m/min, while rotating the roller. The polyurethane elastic yarn that was fed out was caused to travel once around a textured roller (b) having the same diameter, placed at a location 100 cm away, where the surface speed of the roller (b) was varied gradually, to find the speed of the roller (b) wherein the polyurethane elastic yarn is fed out smoothly from the roller (a) without the polyurethane elastic yarn being lifted up on the wound yarn body, where the speed ratio (b)/(a) of the rollers was defined as the unwinding performance of the polyurethane elastic yarn. Smaller values for unwinding performance indicate better separation of the polyurethane elastic yarn.
Note that the unwinding performance test was performed using two wound yarn packages, and the mean thereof was calculated.

Hot Melt Adhesive Performance

A hot melt adhesive agent having, as the main component, a hydrogenated styrene-butadiene styrene copolymer, melted in a pot at 150°C was coated, at stipulated proportions for individual polyurethane elastic yarns (0.03 g/m, 0.07 g/m) using a comb gun while eight lines of polyurethane elastic yarn were caused to move, in a single direction with uniform spacing therebetween, tensioned by a person prescribed draft (draft 3.0) over a nonwoven fabric made from polypropylene with a width of 15 cm, traveling at a speed of 130 m/min, after which another nonwoven fabric made from polypropylene was laid thereover from above, and contact bonded, and wound, to produce a stretchable sheet.
The stretchable sheet thus obtained was secured to a flat plate made of wood, and in a state wherein the nonwoven fabric was completely stretched, razor blade was used to cut, from above the stretchable sheet, a total of 16 locations, being 30 cm from the end on both ends of each of the eight polyurethane elastic yarns on the nonwoven fabric. This tension plate was stored at 40°C, 80% RH, and the contraction of the polyurethane elastic yarn that was secured by the hot melt adhesive agent onto the polypropylene nonwoven fabric, that is, the yarn length (L4) after slipping in, as the original length, and the length (L5), between the two cut portions, were measured at elapsed storage times of two hours and eight hours. Note that the measurements were carried out for a total of 24 elastic fibers, and the mean hot melt adhesive maintenance rates for the 24 fibers was calculated.

$$\text{Hot melt adhesive maintenance rate (\%)} = 100 \times (L4)/(L5).$$

Preparation of Solution (A1)

A solution (A1) was prepared by dissolving 20 mass % of a hydrocarbon resin manufactured by Arakawa Chemical Company ("ARKON (registered trademark)" P-90, thermal softening point = 90°C) in mineral oil wherein the proportion of components having a carbon number of no less than 30 was 2%, for 100 seconds at 35°C, using a Redwood viscometer.

Preparation of Solution (A2)

A solution (A2) was prepared by dissolving 40 mass % of a hydrocarbon resin manufactured by JXTE Energy ("T-REZ (registered trademark)" RA100, thermal softening point = 99°C) in mineral oil wherein the proportion of components having a carbon number of no less than 30 was 1%, for 80 seconds at 35°C, using a Redwood viscometer.

Preparation of Solution (A3)

A solution (A3) was prepared by dissolving 40 mass % of a hydrocarbon resin manufactured by JXTE Energy ("T-REZ (registered trademark)" RA1115, thermal softening point = 114°C) in mineral oil wherein the proportion of components having a carbon number of no less than 30 was 1%, for 80 seconds at 35°C, using a Redwood viscometer.

Preparation of Solution (A4)

A solution (A4) was prepared by dissolving 20 mass % of a hydrocarbon resin manufactured by Arakawa Chemical Company ("ARKON (registered trademark)" M-135, thermal softening point = 135°C) in mineral oil wherein the proportion of components having a carbon number of no less than 30 was 2%, for 100 seconds at 35°C, using a Redwood viscometer.

[Table 1]

| | Hydrocarbon Resin (a) | | | | Hydrocarbon Oil (b) | |
|---|---|---|---|---|---|---|
| | Softening Point: 90°C | Softening Point: 99°C | Softening Point: 115°C | Softening Point: 135° | Viscosity: 100 sec @35°C | Viscosity: 80 sec @35°C |
| | Arkon (R) P-90 | T-REZ RA 100 | T-REZ RC 115 | Arkon (R) M-135 | | |
| Solution (A1) | 40 | | | | 60 | |
| Solution (A2) | | 40 | | | | 60 |
| Solution (A3) | | | 40 | | | 60 |
| Solution (A4) | | | | 20 | 80 | |

Example 1

MDI and PTMG with a number-average molecular weight of 1800 were loaded into a container so that the mole ratio was MDI/PTMG = 1.58/1, and reacted at 90°C, and the reaction product obtained was dissolved in N,N-dimethylacetoamide (DMAc). Next a DMAc solution that includes ethylenediamine and diethylamine was added to the solution in which the aforementioned reaction product was dissolved, to prepare a polyurethane urea solution wherein the solid content in the polymer was 35 mass %.

Following this, a condensation polymer of p-cresol and divinylbenzene ("Metachlor (registered trademark)" 2390, manufactured by DuPont Corporation, as an oxidation inhibiting agent, and 2-[4,6-bis (2, 4-dimethyl phenyl)-1,3,5-triazine-2-yl]-5-(octyloxy) phenol ("Cyasorb (registered trademark)" 1164, manufactured by Cytec Corporation), as an ultraviolet radiation absorbing agent, were mixed with a 3:2 mass ratio, to prepare the DMAc solution (concentration: 35 mass %), and this was used as the additive solution (35 mass %).

The polyurethane urea solution and the additive solution were mixed at a proportion of 98 mass %: 2 mass %, to produce the polyurethane spinning solution (X1).

Solution (A1) was mixed so as to be 10 mass % in respect to the solid content of the polyurethane spinning solution (X1), to prepare a spinning solution (Y1). A polyurethane elastic yarn (580 decitex, 56 filament) (Z1) was manufactured through dry spinning this spinning solution (Y1) with a winding speed of 500 m/min, to produce a 4.5 kg wound yarn body.

Example 2

As the treating agent when winding the polyurethane elastic yarn, a treating agent (B1) of 25% polydimethyl siloxane, 73% mineral oil, and 2% St-Mg was prepared.

A 4.5 kg wound yarn body was produced in the same manner as in Example 1, aside from winding up while applying the treating agent (B1), at 1% dry mass, to the polyurethane elastic yarn during winding.

Examples 3-6, Reference Examples 1-4

4.5 kg wound yarn bodies were produced from polyurethane elastic yarns in the same manner as in Example 1 or Example 2, with the exception of varying the types and/or inclusion proportions of the components as shown in Table 1.

Examples 7-8, and Reference Examples 5-6

4.5 kg wound yarn bodies of polyethylene elastic yarns were produced similarly to the other examples and reference examples, except for changing the gauge to 310 decitex (32 filament) as shown in Table 1.

The results of the various evaluations on the yarns produced are shown in Table 1. The polyurethane elastic yarns of Examples 1 through 8 demonstrated adequate performance in all evaluations. On the other hand, in Reference Examples 1-6, the results were not satisfactory in both the unwinding performance and the hot melt adhesive performance.

Reference Example 7

Preparing Solution (A5)

While an attempt was made to dissolve 20 mass % of a hydrocarbon resin, manufactured by Arakawa Chemical Company ("ARKON (registered trademark)" P-90, thermal softening point: 135°C) in mineral oil wherein the proportion of components with a carbon number of no less than 30 was 38%, for 250 seconds at 35°C using a Redwood viscometer, complete dissolution was not possible, and thus this could not be added to the polyurethane solution.

[Table 2]

| | Polyurethane Elastic Yarn | | Hydrocarbon Resin Solution | Hydrocarbon Resin (A) | | | Hot Melt Adhesive Retention Rate | | Releaseability | Fracture Elongation | Breaking Strength |
|---|---|---|---|---|---|---|---|---|---|---|---|
| | (dtex) | Treatment Agent (B1) | | Type | Softening Point (°C) | Amount added (%) | After 2 hours | After 8 hours | (-) | (%) | (cN) |
| Embodiment 1 | 580 | None | (A1) | Arkon P-90 | 90 | 5 | 92 | 87 | 2.0 | 521 | 340 |
| Embodiment 2 | 580 | 1% | (A1) | Arkon P-90 | 90 | 5 | 93 | 88 | 1.7 | 525 | 342 |
| Embodiment 3 | 580 | None | (A2) | T-REZ RA100 | 99 | 8 | 93 | 87 | 2.2 | 501 | 322 |
| Embodiment 4 | 580 | 1% | (A2) | T-REZ RA100 | 99 | 8 | 94 | 89 | 1.6 | 509 | 328 |
| Embodiment 5 | 580 | None | (A3) | T-REZ RC115 | 115 | 0.8 | 92 | 84 | 2.1 | 533 | 349 |
| Embodiment 6 | 580 | 1% | (A3) | T-REZ RC115 | 115 | 0.8 | 92 | 83 | 1.9 | 530 | 344 |
| Embodiment 7 | 310 | None | (A4) | Arkon M-135 | 135 | 2 | 97 | 93 | 2.2 | 508 | 190 |
| Embodiment 8 | 310 | 1% | (A4) | Arkon M-135 | 135 | 2 | 98 | 93 | 1.9 | 513 | 194 |
| Reference Example 1 | 580 | None | -- | Not used | -- | 0 | 84 | 61 | 2.8 | 522 | 335 |
| Reference Example 2 | 580 | 1% | - | Not used | -- | 0 | 80 | 55 | 2.3 | 528 | 341 |
| Reference Example 3 | 580 | None | -- | Not used | - | 0 | 83 | 60 | 2.7 | 511 | 339 |
| Reference Example 4 | 580 | 1% | -- | Not used | -- | 0 | 82 | 51 | 2.3 | 506 | 333 |
| Reference Example 5 | 310 | None | -- | Not used | -- | 0 | 97 | 90 | 3.0 | 511 | 192 |

(continued)

|  | Polyurethane Elastic Yarn | | Hydrocarbon Resin Solution | Hydrocarbon Resin (A) | | | Hot Melt Adhesive Retention Rate | | Releaseability | Fracture Elongation | Breaking Strength |
|---|---|---|---|---|---|---|---|---|---|---|---|
|  | (dtex) | Treatment Agent (B1) | | Type | Softening Point (°C) | Amount added (%) | After 2 hours | After 8 hours | (-) | (%) | (cN) |
| Reference Example 6 | 310 | 1% | -- | Not used | -- | 0 | 94 | 87 | 2.5 | 497 | 188 |

Industrial Applicability

The polyurethane elastic yarn according to the present invention had superior adhesive properties in respect to the hot melt adhesive agent, and can be used suitably in sanitary products such as disposable diapers, sanitary napkins, and the like, with superior comfort and fit. Moreover there is superior productivity, with no broken yarns in manufacturing sanitary products, such as disposable diapers, sanitary napkins, and the like, at high speeds, due to the superior unwinding properties.

**Claims**

1. A polyurethane elastic yarn including:
   a hydrocarbon resin (A) that has a structure wherein a polymer that includes, as the main structural units, structural units that use an aromatic olefin and/or an aliphatic diolefin as a monomer, is partially hydrogenated or completely hydrogenated; and a polyurethane;

   wherein the hydrocarbon resin (A) is dissolved at no less than 10 mass % at 20 °C in respect to a hydrocarbon oil (b), and is insoluble in DMAc and/or DMF at 20 °C;
   wherein the hydrocarbon oil (b) is a mineral oil or higher alcohol; and
   wherein the higher alcohol is a linear and/or branched monoalcohol selected from hexanol, heptanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, triacosanol, 2-ethylhexanol, 2-propyl heptanol, 2-butyl octanol, 1-methylheptadecanol, 2-hexyloctanol, 1-hexylheptanol, isodecanol, isotridecanol, 3,5,5-trimethyl hexanol, hexenol, heptenol, octenol, nonenol, decenol, dodecenol, dodecenol, tridecenol, tetradecenol, pentadecenol, hexadecenol, heptadecenol, octadecenol, nonadecenol, icosenol, dococenol, tetracosecol, pentacosenol, hexacosenol, heptacosenol, octacosenol, nonacoseneol, triaconsenol, isohexenol, 2-ethylhexenol, isotridecenol, 1-methyl heptadecenol, 1-hexyl heptenol, isotridecenol or isooctadecenol.

2. A polyurethane elastic yarn as set forth in claim 1, wherein:
   the hydrocarbon resin (A) has a structure wherein the polymer that includes structural units that use an aromatic olefin as a monomer is partially hydrogenated or completely hydrogenated, and the aromatic olefin is indene and/or methyl styrene.

3. A polyurethane elastic yarn as set forth in claim 1 or 2, wherein:
   the hydrocarbon resin (A) has a structure wherein the polymer that includes structural units that use an aliphatic diolefin as a monomer is partially hydrogenated or completely hydrogenated, and the aliphatic diolefin is isoprene and/or an isomer thereof.

4. A polyurethane elastic yarn as set forth in any of claim 1 through 3, wherein:
   the thermal softening point of the hydrocarbon resin (A) is no less than 70°C and no greater than 140°C, wherein softening point is measured in accordance with JIS K 2207:2006.

5. A polyurethane elastic yarn as set forth in any of claim 1 through 4, wherein:
   the hydrocarbon resin (A) is included at no less than 0.1 mass % and no greater than 10 mass %.

6. A polyurethane elastic yarn as set forth in any of claim 1 through 5, wherein the mineral oil is selected from a machine oil, a spindle oil or a liquid paraffin, preferably a liquid paraffin.

7. A polyurethane elastic yarn as set forth in any of claim 1 through 5, wherein the mineral oil has a viscosity, using a Redwood viscometer at 30 °C, of between 30 seconds and 350 seconds, preferably between 35 seconds and 200 seconds, more preferably between 40 seconds and 150 seconds.

8. A polyurethane elastic yarn as set forth in any of claim 1 through 7, wherein the hydrocarbon resin (A) is dissolved at no more than 80 mass % at 20°C in respect to hydrocarbon oil (b).

9. A method for manufacturing a polyurethane elastic yarn wherein:
   after a hydrocarbon resin (a) that has a structure wherein a polymer that includes, as the main structural units,

structural units that use an aromatic olefin and/or an aliphatic diolefin as a monomer is partially hydrogenated or completely hydrogenated is dissolved in a hydrocarbon oil (b), the hydrocarbon resin (a) is added so as to be in a range of no less than 0.1 mass % and no greater than 10 mass % in respect to a polyurethane solid content in a polyurethane spinning solution, and solution spun,

wherein hydrocarbon resin (A) is dissolved at no less than 10 mass % at 20°C in respect to a hydrocarbon oil (b), and is insoluble in DMAc and/or DMF at 20°C;

wherein the hydrocarbon oil (b) is a mineral oil or higher alcohol; and

wherein the higher alcohol is a linear and/or branched monoalcohol selected from hexanol, heptanol, octanol, nonanol, decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, triacosanol, 2-ethylhexanol, 2-propyl heptanol, 2-butyl octanol, 1-methylheptadecanol, 2-hexyloctanol, 1-hexylheptanol, isodecanol, isotridecanol, 3,5,5-trimethyl hexanol, hexenol, heptenol, octenol, nonenol, decenol, dodecenol, dodecenol, tridecenol, tetradecenol, pentadecenol, hexadecenol, heptadecenol, octadecenol, nonadecenol, icosenol, docosenol, tetracosecol, pentacosenol, hexacosenol, heptacosenol, octacosenol, nonacoseneol, triaconsenol, isohexenol, 2-ethylhexenol, isotridecenol, 1-methyl heptadecenol, 1-hexyl heptenol, isotridecenol or isooctadecenol.

## Patentansprüche

1. Elastisches Polyurethangarn, das Folgendes einschließt:

   ein Kohlenwasserstoffharz (A), das eine Struktur aufweist, wobei ein Polymer, das als Hauptstruktureinheiten Struktureinheiten einschließt, die ein aromatisches Olefin und/oder ein aliphatisches Diolefin als Monomer verwenden, teilweise hydriert oder vollständig hydriert ist; und ein Polyurethan;
   wobei das Kohlenwasserstoffharz (A) in nicht weniger als 10 Massen-% bei 20 °C in Bezug auf ein Kohlenwasserstofföl (b) gelöst ist und bei 20 °C in DMAc und/oder DMF unlöslich ist;
   wobei das Kohlenwasserstofföl (b) ein Mineralöl oder ein höherer Alkohol ist; und
   wobei der höhere Alkohol ein linearer und/oder verzweigter Monoalkohol ausgewählt aus Hexanol, Heptanol, Octanol, Nonanol, Decanol, Undecanol, Dodecanol, Tridecanol, Tetradecanol, Pentadecanol, Hexadecanol, Heptadecanol, Octadecanol, Nonadecanol, Eicosanol, Heneicosanol, Docosanol, Tricosanol, Tetracosanol, Pentacosanol, Hexacosanol, Heptacosanol, Octacosanol, Nonacosanol, Triacosanol, 2-Ethylhexanol, 2-Propylheptanol, 2-Butyloctanol, 1-Methylheptadecanol, 2-Hexyloctanol, 1-Hexylheptanol, Isodecanol, Isotridecanol, 3,5,5-Trimethylhexanol, Hexenol, Heptenol, Octenol, Nonenol, Decenol, Dodecenol, Dodecenol, Tridecenol, Tetradecenol, Pentadecenol, Hexadecenol, Heptadecenol, Octadecenol, Nonadecenol, Icosenol, Docosenol, Tetracosecol, Pentacosenol, Hexacosenol, Heptacosenol, Octacosenol, Nonacosenol, Triacosenol, Isohexenol, 2-Ethylhexenol, Isotridecenol, 1-Methylheptadecenol, 1-Hexylheptenol, Isotridecenol oder Isooctadecenol ist.

2. Elastisches Polyurethangarn nach Anspruch 1, wobei: das Kohlenwasserstoffharz (A) eine Struktur aufweist, wobei das Polymer, das Struktureinheiten einschließt, die ein aromatisches Olefin als Monomer verwenden, teilweise hydriert oder vollständig hydriert ist und das aromatische Olefin Inden und/oder Methylstyrol ist.

3. Elastisches Polyurethangarn nach Anspruch 1 oder 2, wobei: das Kohlenwasserstoffharz (A) eine Struktur aufweist, wobei das Polymer, das Struktureinheiten einschließt, die ein aliphatisches Diolefin als Monomer verwenden, teilweise hydriert oder vollständig hydriert ist, und das aliphatische Diolefin Isopren und/oder ein Isomer davon ist.

4. Elastisches Polyurethangarn nach einem der Ansprüche 1 bis 3, wobei: der thermische Erweichungspunkt des Kohlenwasserstoffharzes (A) nicht weniger als 70 °C und nicht mehr als 140 °C beträgt, wobei der Erweichungspunkt gemäß JIS K 2207:2006 gemessen wird.

5. Elastisches Polyurethangarn nach einem der Ansprüche 1 bis 4, wobei: das Kohlenwasserstoffharz (A) in nicht weniger als 0,1 Massen-% und nicht mehr als 10 Massen-% eingeschlossen ist.

6. Elastisches Polyurethangarn nach einem der Ansprüche 1 bis 5, wobei das Mineralöl ausgewählt ist aus einem Maschinenöl, einem Spindelöl oder einem flüssigen Paraffin, vorzugsweise einem flüssigen Paraffin.

7. Elastisches Polyurethangarn nach einem der Ansprüche 1 bis 5, wobei das Mineralöl eine Viskosität unter Verwendung eines Redwood-Viskosimeters bei 30 °C zwischen 30 Sekunden und 350 Sekunden, vorzugsweise zwischen 35 Sekunden und 200 Sekunden, besonders bevorzugt zwischen 40 Sekunden und 150 Sekunden aufweist.

8. Elastisches Polyurethangarn nach einem der Ansprüche 1 bis 7, wobei das Kohlenwasserstoffharz (A) in Bezug auf Kohlenwasserstofföl (b) bei 20 °C in nicht mehr als 80 Massen-% gelöst ist.

9. Verfahren zum Herstellen eines elastischen Polyurethangarns, wobei:

nachdem ein Kohlenwasserstoffharz (a), das eine Struktur aufweist, wobei ein Polymer, das als die Hauptstruktureinheiten Struktureinheiten einschließt, die ein aromatisches Olefin und/oder ein aliphatisches Diolefin als Monomer verwenden, teilweise hydriert oder vollständig hydriert worden ist, in einem Kohlenwasserstofföl (b) gelöst worden ist, das Kohlenwasserstoffharz (a) so zugegeben wird, dass es in einem Bereich von nicht weniger als 0,1 Massen-% und nicht mehr als 10 Massen-% liegt, bezogen auf einen Polyurethanfeststoffgehalt in einer Polyurethanspinnlösung, und lösungsversponnen wird,
wobei das Kohlenwasserstoffharz (A) in Bezug auf ein Kohlenwasserstofföl (b) bei 20 °C in nicht weniger als 10 Massen-% gelöst ist und bei 20 °C in DMAc und/oder DMF unlöslich ist;
wobei das Kohlenwasserstofföl (b) ein Mineralöl oder ein höherer Alkohol ist; und
wobei der höhere Alkohol ein linearer und/oder verzweigter Monoalkohol ausgewählt aus Hexanol, Heptanol, Octanol, Nonanol, Decanol, Undecanol, Dodecanol, Tridecanol, Tetradecanol, Pentadecanol, Hexadecanol, Heptadecanol, Octadecanol, Nonadecanol, Eicosanol, Heneicosanol, Docosanol, Tricosanol, Tetracosanol, Pentacosanol, Hexacosanol, Heptacosanol, Octacosanol, Nonacosanol, Triacosanol, 2-Ethylhexanol, 2-Propylheptanol, 2-Butyloctanol, 1-Methylheptadecanol, 2-Hexyloctanol, 1-Hexylheptanol, Isodecanol, Isotridecanol, 3,5,5-Trimethylhexanol, Hexenol, Heptenol, Octenol, Nonenol, Decenol, Dodecenol, Dodecenol, Tridecenol, Tetradecenol, Pentadecenol, Hexadecenol, Heptadecenol, Octadecenol, Nonadecenol, Icosenol, Dococenol, Tetracosecol, Pentacosenol, Hexacosenol, Heptacosenol, Octacosenol, Nonacosenol, Triacosenol, Isohexenol, 2-Ethylhexenol, Isotridecenol, 1-Methylheptadecenol, 1-Hexylheptenol, Isotridecenol oder Isooctadecenol ist.

## Revendications

1. Fil élastique de polyuréthane comprenant :

une résine d'hydrocarbure (A) ayant une structure dans laquelle un polymère qui comprend, comme unités structurales principales, des unités structurales qui utilisent une oléfine aromatique et/ou une dioléfine aliphatique comme monomère, est partiellement hydrogéné ou complètement hydrogéné ; et un polyuréthane ;
dans lequel la résine d'hydrocarbure (A) est dissoute à raison de pas moins de 10 % en masse à 20 °C par rapport à une huile d'hydrocarbure (b), et est insoluble dans le DMAc et/ou le DMF à 20 °C ;
dans lequel l'huile d'hydrocarbure (b) est une huile minérale ou un alcool supérieur ; et
dans lequel l'alcool supérieur est un monoalcool linéaire et/ou ramifié choisi parmi hexanol, heptanol, octanol, nonanol, décanol, undécanol, dodécanol, tridécanol, tétradécanol, pentadécanol, hexadécanol, heptadécanol, octadécanol, nonadécanol, eicosanol, hénéicosanol, docosanol, tricosanol, tétracosanol, pentacosanol, hexacosanol, heptacosanol, octacosanol, nonacosanol, triacosanol, 2-éthylhexanol, 2-propyl heptanol, 2-butyl octanol, 1-méthylheptadécanol, 2-hexyloctanol, 1-hexylheptanol, isodécanol, isotridécanol, 3,5,5-triméthyl hexanol, hexénol, hepténol, octénol, nonénol, décénol, dodécénol, dodécénol, tridécénol, tétradécénol, pentadécénol, hexadécénol, heptadécénol, octadécénol, nonadécénol, icosenol, dococénol, tétracosénol, pentacosénol, hexacosénol, heptacosénol, octacosénol, nonacosénéol, triacosénol, isohexénol, 2-éthylhexénol, isotridécénol, 1-méthyl-heptadécénol, 1-hexyl hepténol, isotridécénol ou isooctadécénol.

2. Fil élastique de polyuréthane selon la revendication 1, dans lequel :
la résine d'hydrocarbure (A) présente une structure dans laquelle le polymère qui comprend des unités structurales qui utilisent une oléfine aromatique comme monomère est partiellement hydrogéné ou complètement hydrogéné, et l'oléfine aromatique est l'indène et/ou le méthylstyrène.

**3.** Fil élastique de polyuréthane selon la revendication 1 ou 2, dans lequel :
la résine d'hydrocarbure (A) présente une structure dans laquelle le polymère qui comprend des unités structurales qui utilisent une dioléfine aliphatique comme monomère est partiellement hydrogéné ou complètement hydrogéné, et la dioléfine aliphatique est l'isoprène et/ou un isomère de celui-ci.

**4.** Fil élastique de polyuréthane selon l'une quelconque des revendications 1 à 3, dans lequel :
le point de ramollissement thermique de la résine d'hydrocarbure (A) n'est pas inférieur à 70 °C et n'est pas supérieur à 140 °C, le point de ramollissement étant mesuré conformément à la norme JIS K 2207:2006.

**5.** Fil élastique de polyuréthane selon l'une quelconque des revendications 1 à 4, dans lequel :
la résine d'hydrocarbure (A) est comprise en une quantité non inférieure à 0,1 % en masse et non supérieure à 10 % en masse.

**6.** Fil élastique de polyuréthane selon l'une quelconque des revendications 1 à 5, dans lequel l'huile minérale est choisie parmi une huile de machine, une huile de broche ou une paraffine liquide, de préférence une paraffine liquide.

**7.** Fil élastique de polyuréthane selon l'une quelconque des revendications 1 à 5, dans lequel l'huile minérale a une viscosité, en utilisant un viscosimètre Redwood à 30 °C, comprise entre 30 secondes et 350 secondes, de préférence entre 35 secondes et 200 secondes, plus préférablement entre 40 secondes et 150 secondes.

**8.** Fil élastique de polyuréthanne selon l'une quelconque des revendications 1 à 7, dans lequel la résine d'hydrocarbure (A) est dissoute en une quantité non supérieure à 80 % en masse à 20 °C par rapport à l'huile d'hydrocarbure (b).

**9.** Procédé de fabrication d'un fil élastique de polyuréthane dans lequel :

après qu'une résine d'hydrocarbure (a) ayant une structure dans laquelle un polymère qui comprend, comme unités structurales principales, des unités structurales qui utilisent une oléfine aromatique et/ou une dioléfine aliphatique comme monomère, qui est partiellement hydrogéné ou complètement hydrogéné, est dissout dans une huile d'hydrocarbure (b), la résine d'hydrocarbure (a) est ajoutée de manière à se situer dans une plage non inférieure à 0,1 % en masse et non supérieure à 10 % en masse par rapport à la teneur en solides de polyuréthane dans une solution de filage de polyuréthane, et filée en solution,
dans lequel la résine d'hydrocarbure (A) est dissoute à raison de pas moins de 10 % en masse à 20 °C par rapport à une huile d'hydrocarbure (b), et est insoluble dans le DMAc et/ou le DMF à 20 °C ;
dans lequel l'huile d'hydrocarbure (b) est une huile minérale ou un alcool supérieur ; et
dans lequel l'alcool supérieur est un monoalcool linéaire et/ou ramifié choisi parmi hexanol, heptanol, octanol, nonanol, décanol, undécanol, dodécanol, tridécanol, tétradécanol, pentadécanol, hexadécanol, heptadécanol, octadécanol, nonadécanol, eicosanol, hénéicosanol, docosanol, tricosanol, tétracosanol, pentacosanol, hexacosanol, heptacosanol, octacosanol, nonacosanol, triacosanol, 2-éthylhexanol, 2-propyl heptanol, 2-butyl octanol, 1-méthylheptadécanol, 2-hexyloctanol, 1-hexylheptanol, isodécanol, isotridécanol, 3,5,5-triméthyl hexanol, hexénol, hepténol, octénol, nonénol, décénol, dodécénol, dodécénol, tridécénol, tétradécénol, pentadécénol, hexadécénol, heptadécénol, octadécénol, nonadécénol, icosenol, dococénol, tétracosénol, pentacosénol, hexacosénol, heptacosénol, octacosénol, nonacosénéol, triacosénol, isohexénol, 2-éthylhexénol, isotridécénol, 1-méthyl-heptadécénol, 1-hexyl hepténol, isotridécénol ou isooctadécénol.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010168717 A
- JP 2002035029 A
- WO 2016143499 A
- WO 2015038977 A
- GB 2530436 A
- JP 2615131 B
- JP S6126612 A
- JP H2289516 B